(19) Europäisches Patentamt
European Patent Office
Office européen des brevets

(11) **EP 4 425 422 A1**

(12) **EUROPEAN PATENT APPLICATION**
published in accordance with Art. 153(4) EPC

(43) Date of publication:
**04.09.2024 Bulletin 2024/36**

(21) Application number: **23806596.5**

(22) Date of filing: **20.03.2023**

(51) International Patent Classification (IPC):
**G06T 5/00** (2024.01)

(52) Cooperative Patent Classification (CPC):
**G06T 3/40; G06T 5/60; G06T 5/77;
H04N 21/23424;** G06T 2207/10016;
G06T 2207/20084

(86) International application number:
**PCT/CN2023/082430**

(87) International publication number:
**WO 2023/221636 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.05.2022 CN 202210545680**

(71) Applicant: **Tencent Technology (Shenzhen)
Company Limited
Shenzhen, Guangdong, 518057 (CN)**

(72) Inventors:
• **ZHONG, Ligeng
  Shenzhen, Guangdong 518057 (CN)**
• **ZHU, Yunquan
  Shenzhen, Guangdong 518057 (CN)**
• **QIAO, Ruizhi
  Shenzhen, Guangdong 518057 (CN)**

(74) Representative: **Nederlandsch Octrooibureau
P.O. Box 29720
2502 LS The Hague (NL)**

(54) **VIDEO PROCESSING METHOD AND APPARATUS, AND DEVICE, STORAGE MEDIUM AND PROGRAM PRODUCT**

(57) The embodiments of the present disclosure relate to the technical field of computers. Provided are a video processing method and apparatus, and a device, a storage medium and a program product. The method comprises: acquiring a first target frame sequence and a first target mask sequence of a video to be processed; performing frame extraction processing, so as to obtain a first sampling frame sequence, a first residual frame sequence, a first sampling mask sequence, and a first residual mask sequence; performing optical flow propagation and image inpainting processing, so as to obtain a first inpainted sampling frame sequence and a first inpainted residual frame sequence; and merging the first inpainted sampling frame sequence and the first inpainted residual frame sequence, so as to obtain an inpainted video of the video to be processed. In the present disclosure, a sampling frame sequence and a first sampling mask sequence can be processed first by means of frame extraction processing, so as to obtain a first inpainted sampling frame sequence; and a first residual frame sequence is then processed by means of the first inpainted sampling frame sequence, so as to acquire an inpainted video. The present disclosure can improve the video processing efficiency.

FIG. 2

**Description**

RELATED APPLICATION

This application claims priority to Chinese Patent Application No. 202210545680.X, entitled "VIDEO PROCESSING METHOD AND APPARATUS, DEVICE, AND STORAGE MEDIUM" filed with the China National Intellectual Property Administration on May 19, 2022.

FIELD OF THE TECHNOLOGY

The present disclosure relates to the field of computer technologies, and in particular, to video processing.

BACKGROUND OF THE DISCLOSURE

With the development of computer technologies, requirements of processing videos also increase gradually. For example, people may need to remove a watermark, a caption, a moving object, or the like in a video. However, in the video, the watermark, caption, moving object, or the like blocks content of the video. Therefore, after a removal operation is completed, an unknown region generated from the removal operation may occur in the video. Therefore, it is further necessary to perform filling, inpainting, or other processing on the unknown region in the video. However, schemes of inpainting videos in related art have the problem of low efficiency, and it is difficult to achieve large-scale commercial deployment of the schemes.

SUMMARY

Embodiments of the present disclosure provide a video processing method and apparatus, a device, a storage medium, and a program product, which can improve the efficiency of video processing.
Embodiments of the present disclosure provide a video processing method. The method includes: acquiring a first target frame sequence and a first target mask sequence of an initial video, the first target frame sequence including a plurality of consecutive frames of the initial video, the first target mask sequence including at least one frame to be inpainted of the initial video; performing frame extraction respectively on the first target frame sequence and the first target mask sequence to obtain a first sampled frame sequence and a first remaining frame sequence, and a first sampled mask sequence and a first remaining mask sequence; performing optical flow propagation and image inpainting on the first sampled frame sequence and the first sampled mask sequence to obtain a first inpainted sampled frame sequence; performing optical flow propagation and image inpainting on the first inpainted sampled frame sequence, the first remaining frame sequence, and the first remaining mask sequence to obtain a first inpainted remaining frame sequence; and combining the first inpainted sampled frame sequence and the first inpainted remaining frame sequence to obtain an inpainted video of the initial video.
Embodiments of the present disclosure provide a video processing apparatus. The apparatus includes: an acquisition module, configured to acquire a first target frame sequence and a first target mask sequence of an initial video, the first target frame sequence incluidng a plurality of consecutive frames of the initial video, the first target mask sequence including at least one frame to be inpainted of the initial video; and a frame extraction module, configured to perform frame extraction respectively on the first target frame sequence and the first target mask sequence to obtain a first sampled frame sequence and a first remaining frame sequence, and a first sampled mask sequence and a first remaining mask sequence, the acquisition module being further configured to perform optical flow propagation and image inpainting on the first sampled frame sequence and the first sampled mask sequence to obtain a first inpainted sampled frame sequence; the acquisition module being further configured to perform optical flow propagation and image inpainting on the first inpainted sampled frame sequence, the first remaining frame sequence, and the first remaining mask sequence to obtain a first inpainted remaining frame sequence; and the acquisition module being further configured to combine the first inpainted sampled frame sequence and the first inpainted remaining frame sequence to obtain an inpainted video of the initial video.
Embodiments of the present disclosure provide a computer device, including a processor, a memory, and an input/output interface, the processor being connected to the memory and the input/output interface, the input/output interface being configured to receive data and output data, the memory being configured to store a computer program, the processor being configured to invoke the computer program, to cause the computer device including the processor to perform the video processing method in any embodiment of the present disclosure.
Embodiments of the present disclosure provide a computer-readable storage medium, the computer-readable storage medium storing a computer program, the computer program being suitable for being loaded and executed by a processor, to cause a computer device having the processor to perform the video processing method in any embodiment of the present disclosure.

Embodiments of the present disclosure provide a computer program product, the computer program product including a computer program, the computer program being stored in a computer-readable storage medium, a processor of a computer device reading the computer program from the computer-readable storage medium, the processor executing the computer program, to cause the computer device to perform the video processing method provided in various optional manners in any embodiment of the present disclosure.

In the technical solutions provided in the embodiments of the present disclosure, a first sampled frame sequence and a first sampled mask sequence may be first processed by using a frame extraction method to obtain a first inpainted sampled frame sequence. A first remaining frame sequence is then processed through the first inpainted sampled frame sequence and a first remaining mask sequence, to acquire an inpainted video of an initial video. Therefore, in the present disclosure, remaining frame sequences may be processed by using the first inpainted sampled frame sequence through frame extraction, to avoid multiple rounds of processing of each frame of image, thereby reducing a calculation amount. Therefore, the efficiency of video processing can be improved.

BRIEF DESCRIPTION OF THE DRAWINGS

FIG. 1 is a schematic diagram of an implementation environment according to an embodiment of the present disclosure;

FIG. 2 is a flowchart of a video processing method according to an embodiment of the present disclosure;

FIG. 3 is a schematic diagram of a crop region according to an embodiment of the present disclosure;

FIG. 4 is a schematic diagram of performing optical flow propagation on a frame of image according to an embodiment of the present disclosure;

FIG. 5 is a framework diagram of a flow estimation module according to an embodiment of the present disclosure;

FIG. 6 is a schematic diagram of a process of flow estimation and flow filling according to an embodiment of the present disclosure;

FIG. 7 is a schematic diagram of a process of obtaining a first inpainted remaining frame sequence according to an embodiment of the present disclosure;

FIG. 8 is a schematic diagram of a process of video processing according to an embodiment of the present disclosure;

FIG. 9 is a flowchart of another video processing method according to an embodiment of the present disclosure;

FIG. 10 is a schematic diagram of a video processing effect of removing a watermark according to an embodiment of the present disclosure;

FIG. 11 is a schematic diagram of a video processing effect of removing a caption according to an embodiment of the present disclosure;

FIG. 12 is a schematic diagram of a video processing effect of removing a moving object according to an embodiment of the present disclosure;

FIG. 13 is a schematic diagram of a video processing apparatus according to an embodiment of the present disclosure; and

FIG. 14 is a schematic structural diagram of a computer device according to an embodiment of the present disclosure.

DESCRIPTION OF EMBODIMENTS

The following clearly and completely describes the technical solutions in the embodiments of the present disclosure with reference to the accompanying drawings in the embodiments of the present disclosure. The described embodiments are some exemplary embodiments of the present disclosure and not to be taken in an exhaustive sense. All other embodiments obtained by a person of ordinary skill in the art based on the embodiments of the present disclosure without creative efforts shall fall within the scope of the present disclosure.

In addition, the accompanying drawings are merely exemplary illustrations of the present disclosure and are not necessarily drawn to scale. A same reference numeral in the accompanying drawings represents same or similar components, and therefore repeated descriptions of the components are appropriately omitted. Some block diagrams shown in the accompanying drawings are functional entities and do not necessarily correspond to physically or logically independent entities. The functional entities may be implemented in a software form, or in one or more hardware modules or integrated circuits, or in different networks and/or processor apparatuses and/or microcontroller apparatuses.

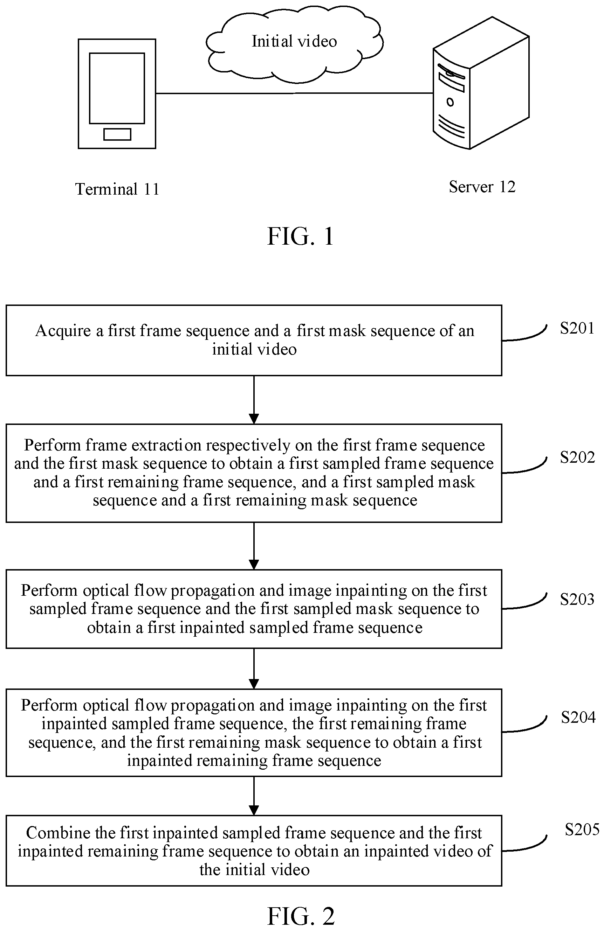

Embodiments of the present disclosure provide a video processing method. FIG. 1 is a schematic diagram of an implementation environment according to an embodiment of the present disclosure. In the embodiments of the present disclosure including the embodiments of both the claims and specification (hereinafter referred to as "all embodiments of the present disclosure"), the implementation environment may include a terminal 11 and a server 12.

The terminal 11 may send an initial video to the server 12. The server 12 may receive the initial video, may process the initial video by using the method provided in the embodiments of the present disclosure to obtain an inpainted video of the initial video, and may send the inpainted video obtained through the processing to the terminal 11. The terminal 11 may receive the inpainted video. Alternatively, the terminal 11 may process the initial video by using the method provided in the embodiments of the present disclosure to obtain the inpainted video. In addition, the terminal 11 may store the inpainted video.

For example, the terminal 11 may be connected to the server 12 by a network. The network may be a wireless network or a wired network. The wireless network or the wired network uses a standard communication technology and/or protocol. The network is usually the Internet, but may alternatively be any other networks, including but not limited to a local area network (LAN), a metropolitan area network (MAN), a wide area network (WAN), a mobile, wired, or wireless network, or any combination of a dedicated network or a virtual dedicated network). In some embodiments, technologies and/or formats, such as hypertext markup language (HTML) and extensible markup language (XML), are used for representing data exchanged through a network. In addition, all or some links may be encrypted by using conventional encryption technologies such as secure socket layer (SSL), transport layer security (TLS), virtual private network (VPN), and internet protocol security (IPsec). In some other embodiments, custom and/or dedicated data communication technologies may also be used in place of or in addition to the foregoing data communication technologies.

For example, the terminal 11 may be various electronic devices, including, but not limited to, a mobile phone, a computer, a laptop portable computer, a desktop computer, a wearable device, a smart speech interaction device, an in-vehicle terminal, a smart home appliance, an aircraft, an augmented reality device, a virtual reality device, and the like.

For example, the server 12 may be a server that provides various services, for example, a backend management server that provides support for an apparatus operated by a user by using the terminal 11. The backend management server may perform processing such as analysis on received data, and feed back a processing result to the terminal.

In some embodiments, the server 12 may be an independent physical server, or may be a server cluster or distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform. The terminal may be a smartphone, a tablet computer, a laptop computer, a desktop computer, a smart speaker, a smart watch, or the like, but is not limited thereto. The terminal and the server may be directly or indirectly connected in a wired or wireless communication manner. This is not limited in this application.

A person skilled in the art may know that a quantity of the terminals 11 and a quantity of the servers 12 in FIG. 1 are both exemplary, and according to an actual requirement, any quantity of terminals 11 and any quantity of servers 12 may be provided. This is not limited in all embodiments of the present disclosure.

The implementation in this example is described below in detail with reference to the accompanying drawings and embodiments.

First, embodiments of the present disclosure provide a video processing method. The method may be performed by any computer device having a computing processing capability. An example in which the method is applied to a terminal is used below.

FIG. 2 is a flowchart of a video processing method in an embodiment of the present disclosure. As shown in FIG. 2, the video processing method provided in the embodiments of the present disclosure may include the following S201 to S205:

S201: Acquire a first target frame sequence and a first target mask sequence of an initial video.

A type and an acquisition source of the initial video are not limited in all embodiments of the present disclosure. For example, the initial video may be a photographic work of a user or a video on a video platform.

In some embodiments, the first target frame sequence of the initial video may include a plurality of consecutive frames of images in the initial video and/or a frame sequence obtained by processing (for example, cropping and/or zooming) a plurality of consecutive frames of images in the initial video. The first target frame sequence includes at least one frame of image that requires processing (for example, inpainting, or removal of a caption, a watermark or some specific objects or people, or the like). The at least one frame of image that requires processing may be determined according to an actual application scenario. For example, for a video inpainting scenario, the image that requires processing is an image with a missing region in the initial video. The missing region is inpainted by using the method provided in the embodiments of the present disclosure. In another example, for a scenario of removing a caption in a video, the image that requires processing is an image with a caption in the initial video. A region of the caption is removed by using the method provided in the embodiments of the present disclosure, and the region with the caption removed is filled and inpainted.

In some embodiments, the first target mask sequence of the initial video may correspond to the first target frame sequence. The first target mask sequence is configured for indicating a region that requires processing in the image that requires processing in the first target frame sequence. Therefore, the first target mask sequence may be represented as a coordinate matrix set. The coordinate matrix set includes a plurality of coordinate matrices. Each target mask may be represented by a corresponding coordinate matrix. For example, for a scenario of removing a caption, the region that requires processing is a region in which a caption that needs to be removed is located. In another example, for a scenario in which a watermark needs to be removed, the region that requires processing is a region in which a watermark that needs to be removed is located. The region that requires processing may also be referred to as a mask region. A method for obtaining the first target mask sequence is not limited in all embodiments of the present disclosure. For example, the first target mask sequence may be obtained based on an algorithm. For example, for a scenario of removing a watermark, a caption, and/or the like, a watermark or the like may be detected based on an algorithm, to acquire the first target mask sequence. Alternatively, the first target mask sequence may be obtained based on a manual annotation method.

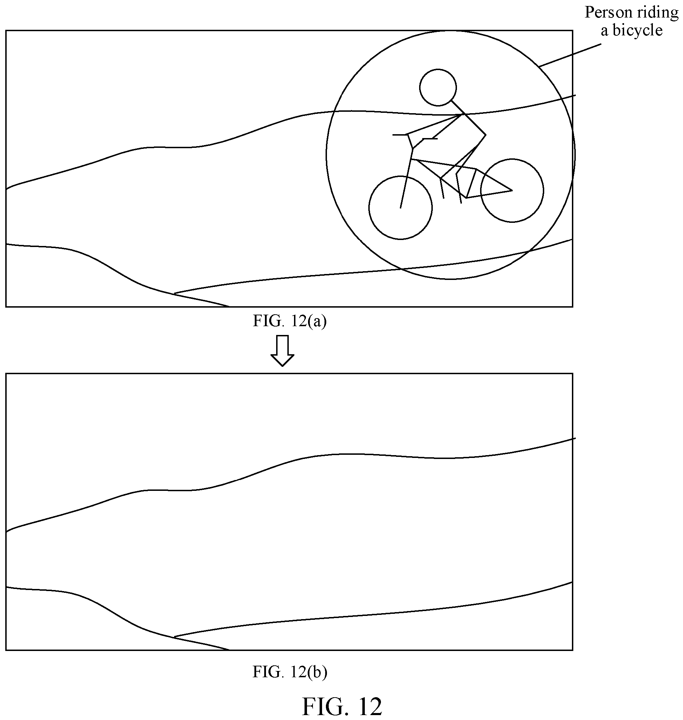

For example, the first target frame sequence may be represented as $x = \{x_t\}$, $(t = 0,1,2, ..., T)$, where T may be an integer greater than or equal to zero, and $x_t$ is a $(t+1)^{th}$ frame of image in the first target frame sequence x. Corresponding to the first target frame sequence, the first target mask sequence may be represented as $m = \{m_t\}$, $(t = 0,1,2, ..., T)$. $m_t$ in the first target mask sequence m is a $(t+1)^{th}$ mask, and $m_t$ may be represented as a binary matrix. For example, for the region that requires processing in the first target frame sequence, a value of $m_t$ may be 1. For a region that does not require processing in the first target frame sequence, the value of $m_t$ may be 0. However, the present disclosure is not limited thereto. For example, for the scenario shown in FIG. 12, a person riding a bicycle in FIG. 12 needs to be removed. The value of $m_t$ in a region corresponding to the person riding a bicycle may be 1, and the value of $m_t$ in the other region may be 0.

In some embodiments, a plurality of frames of images including at least one frame of image that requires processing in the initial video are denoted as a first frame sequence. The first frame sequence may be directly used as the first target frame sequence. A mask sequence corresponding to the first frame sequence is denoted as a first mask sequence. When the first frame sequence is directly used as the first target frame sequence, the first mask sequence may be directly used as the first target mask sequence.

In some other embodiments, to reduce the workload of processing the initial video to further improve the speed of video processing, the first frame sequence and the first mask sequence may be processed first, to acquire the first target frame sequence and the first target mask sequence of the initial video.

For example, the first frame sequence and the first mask sequence may be processed in the following two manners to acquire the first target frame sequence and the first target mask sequence of the initial video.

In Manner 1, the acquiring a first target frame sequence and a first target mask sequence of an initial video may include: acquiring a first frame sequence of the initial video and a first mask sequence corresponding to the first frame sequence; in a case that a proportion of a mask region in the first mask sequence is less than a proportion threshold, determining a target mask according to the first mask sequence, where a mask region of the target mask covers the mask region in the first mask sequence; and cropping the first frame sequence and the first mask sequence respectively according to the target mask to obtain the first target frame sequence and the first target mask sequence.

For example, all masks in the first mask sequence may be acquired. When proportions of any mask regions in all the masks in the frames of images corresponding to the first frame sequence are all less than the proportion threshold, because a to-be-filled region (that is, a corresponding mask region) is only correlated with surrounding information of the to-be-filled region, if the mask regions in the frames of images in the first frame sequence have small coverage areas, it is not necessary to process the complete first frame sequence and the complete first mask sequence. Therefore, the first frame sequence and the first mask sequence may be cropped. A value of the proportion threshold is not limited in all embodiments of the present disclosure. The value of the proportion threshold may be defined based on experience or an application scenario.

In all embodiments of the present disclosure, a target mask M may be determined first. When the target mask M covers all the masks in the first mask sequence and an area proportion of a mask region in the target mask M in the frames of images in the first frame sequence is less than the proportion threshold, it is determined that the proportion of the mask region in the first mask sequence is less than the proportion threshold. That is, when it is determined that the mask region in the target mask is small, it may be determined accordingly that the mask regions of all the frames of images in the first mask sequence are relatively small. Therefore, the first frame sequence and the first mask sequence may be cropped to obtain the first target frame sequence and the first target mask sequence.

In some embodiments, the target mask may be a mask that covers all the masks in the first mask sequence. Particularly, when all the masks in the first mask sequence are same, the target mask may be any mask in the first mask sequence.

For example, in an application scenario of removing a watermark and/or a caption, because regions corresponding to watermarks and captions in all the frames of images are the same, when the first mask sequence is m = {$m_t$}, (t = 0,1,2, ..., T), for different $t_1$ and $t_2$ ($t_1$ and $t_2$ are both positive integers greater than or equal to zero and less than or equal to T, and $t_1$ and $t_2$ are different), corresponding $m_{t1}$ and $m_{t2}$ may be equal, and the target mask M may be equal to any $m_t$ in the first mask sequence. Subsequently, the first frame sequence and the first mask sequence may be cropped based on a size of the mask region of the target mask, to obtain the first target frame sequence and the first target mask sequence.

In all embodiments of the present disclosure, the cropping the first frame sequence and the first mask sequence respectively according to the target mask to obtain the first target frame sequence and the first target mask sequence may include: obtaining an external extension pixel quantity of the mask region of the target mask according to a length and a width of the mask region of the target mask; obtaining a crop boundary of the mask region of the target mask according to the length, the width, and the external extension pixel quantity of the mask region of the target mask; obtaining a crop region including the mask region of the target mask according to the crop boundary of the mask region of the target mask and the length and the width of the mask region of the target mask; and cropping the first frame sequence and the first mask sequence according to the crop region to obtain the first target frame sequence and the first target mask sequence.

In some embodiments, after the target mask M is determined, the length and width of the mask region of the target mask M may be determined according to a coverage range of the mask region in the target mask M. For example, the coverage range of the mask region in M may be represented as [$x_1$, $y_1$, $x_2$, $y_2$], where ($x_1$, $y_1$) may be a coordinate value of an upper left corner of the coverage range of the mask region in M, and ($x_2$, $y_2$) may be a coordinate value of a lower right corner of the coverage range of the mask region. Therefore, the length of the mask region of the target mask (the length in Formula (1) is represented as h, and h is a real number greater than 0) may be calculated by using the following Formula (1), and the width of the mask region of the target mask (the width in Formula (2) is represented as w, and w is a real number greater than 0) may be calculated by using the following Formula (2):

$$h = x_2 - x_1 \ (1),$$

and

$$w = y_2 - y_1 \ (2).$$

After the length h and the width w of the mask region of the target mask are obtained, the external extension pixel quantity $minBound_{pix}$ of the mask region of the target mask may be calculated by using the following Formula (3). For example, the external extension pixel quantity is a value of a pixel quantity by which the mask region of the target mask needs to be extended. For example, the external extension pixel quantity may be 1152 or 2048.

$$minBound_{pix} = a + b * \frac{edge}{c} \ (3),$$

where $minBound_{pix}$ is the external extension pixel quantity of the mask region of the target mask. a is the smallest extension pixel quantity set based on a resolution of the initial video, b is a slope of an extension pixel quantity for the resolution of the initial video, and c may be a pixel quantity of a length or width of the initial video with a large data amount. For example, a, b, and c are real numbers greater than 0. Values of a, b, and c in Formula (3) are not limited in all embodiments of the present disclosure. The values of a, b, and c may be set according to experience or an application scenario. For example, a may be 128, b may be 64, and c may be 1024, or a may be 196, b may be 48, and c may be 960. edge is configured for indicating the larger value in the length and width of the mask region of the target mask, and a value of edge may be calculated by using the following Formula (4):

$$edge = \max(h, w) \quad (4).$$

Subsequently, extension ranges of the mask region of the target mask in an x-axis direction and a y-axis direction may be obtained by using the external extension pixel quantity of the mask region of the target mask. For example, values of the extension ranges may be estimated according to a movement amplitude in the video. Two aspects may be considered in a process of the estimation. In one aspect, an extension region needs to cover a particular range, to include pixels and context information required in a process of optical flow propagation. Moreover, in a case that it is ensured that optical flow propagation is not affected, the extension ranges may be as small as possible, to reduce a processing time. The extension ranges of the mask region of the target mask in the x-axis direction and the y-axis direction are used as the crop boundary of the mask region of the target mask. For example, the extension range of the mask region of the target mask in the x-axis direction may be calculated by using the following Formula (5), and the extension range of the mask region of the target mask in the y-axis direction may be calculated by using the following Formula (6).

$$minBound_h = \begin{cases} \frac{h}{r} * \frac{(1-r)}{2} \\ minBound_{pix}, others \end{cases}, if \frac{h}{r} * \frac{1-r}{2} > minBound_{pix} \quad (5),$$

and

$$minBound_w = \begin{cases} \frac{w}{r} * \frac{(1-r)}{2} \\ minBound_{pix}, others \end{cases}, if \frac{w}{r} * \frac{1-r}{2} > minBound_{pix} \quad (6),$$

where $minBound_h$ is the extension range of the mask region of the target mask in the x-axis direction. $minBound_w$ is the extension range of the mask region of the target mask in the y-axis direction. r is a proportion of a side length of the mask region of the target mask in a side length corresponding to the crop region. Therefore, $minBound_h$ and $minBound_w$ are crop boundaries of the mask region of the target mask in the x-axis direction and the y-axis direction.

For example, the crop region may be calculated by using the following Formulas (7) to (10).

$$x_{crop1} = clip(x_1 - minBound_w, 0, w) \quad (7),$$

$$y_{crop1} = clip(y_1 - minBound_h, 0, h) \quad (8),$$

$$x_{crop2} = clip(x_2 + minBound_w, 0, w) \quad (9),$$

and

$$y_{crop2} = clip(y_2 + minBound_h, 0, h) \quad (10),$$

where $(x_{crop1}, y_{crop1})$ is a coordinate value of an upper left corner of the crop region. $(x_{crop2}, y_{crop2})$ is a coordinate value of a lower right corner of the crop region. The function clip is configured for restricting a value inputted into the function clip into a corresponding interval. For example, $x_{crop1}$ is used as an example. The value inputted into the function clip is $x_1$ - $minBound_w$. Therefore, a value of ($x_1$ - $minBound_w$) is to range from 0 to w. Therefore, when the value of ($x_1$ - $minBound_w$) ranges from 0 to w, the value of ($x_1$ - $minBound_w$) is directly used as $x_{crop1}$. When the value of ($x_1$ - $minBound_w$) is greater than w, the value of w is used as $x_{crop1}$. When the value of ($x_1$ - $minBound_w$) is less than 0, let $x_{crop1}$ = 0.

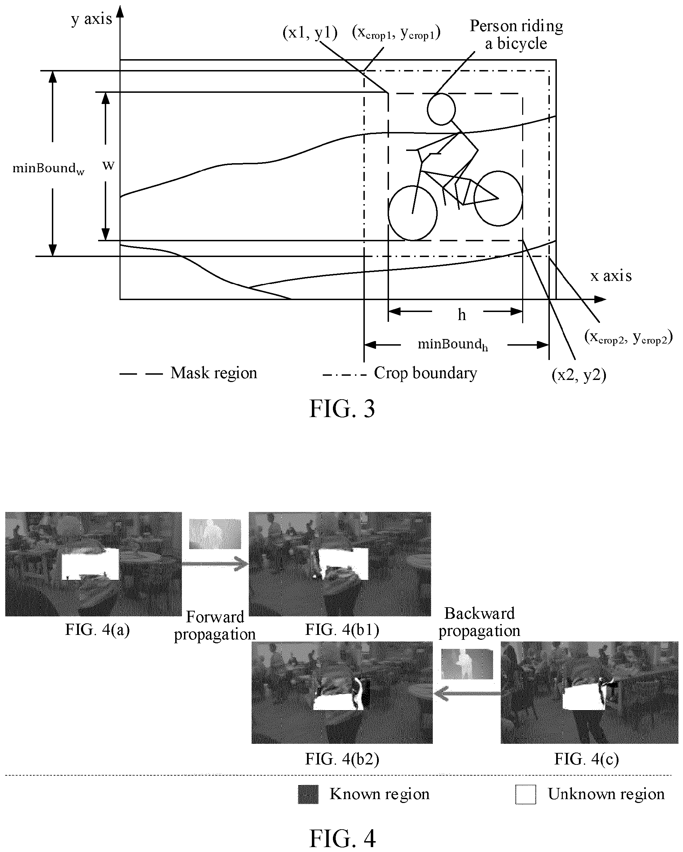

For example, FIG. 3 is a schematic diagram of a crop region. As shown in FIG. 3, the target mask corresponds to the person riding a bicycle. Therefore, the mask region of the target mask M may be shown by a dashed line in FIG. 3. $(x_1, y_1)$ is the coordinate value of the upper left corner of the coverage range of the mask region, and $(x_2, y_2)$ is the coordinate value of the lower right corner of the coverage range of the mask region. Therefore, the length h of the mask region of the target mask M and the width w of the mask region of the target mask M may be calculated. Then, the extension range $minBound_h$ in the x-axis direction and the extension range $minBound_w$ in the y-axis direction of the target mask M of the mask region may be calculated. A crop boundary obtained accordingly may be shown by a dash-dotted line in FIG. 3. Then, the crop region may be calculated by using the foregoing Formulas (7) to (10). For the case shown in FIG. 3, the obtained $(x_{crop1}, y_{crop1})$ and $(x_{crop2}, y_{crop2})$ are respectively a coordinate value of an upper left corner and a coordinate value of a lower right corner of a region defined by the crop boundary.

In this case, the purpose of calculating the extension ranges of the mask region of the target mask in the x-axis direction and the y-axis direction is that a sufficient number of pixels of a non-mask region can be kept after cropping. The pixels of the non-mask region can be configured for flow filling and pixel propagation inside the mask region, and also affect image inpainting.

Through the foregoing calculation process, the crop region may be obtained. Subsequently, the first frame sequence and the first mask sequence may be respectively cropped according to the crop region, and only parts in the crop region are kept for both the first frame sequence and the first mask sequence, to obtain the first target frame sequence and the first target mask sequence.

In the foregoing cropping of the first frame sequence and the first mask sequence, for a scenario in which the proportion of the mask region in the first mask sequence is less than the proportion threshold, through a crop operation, a quantity of pixels to be processed can be effectively reduced. Therefore, the workload of processing the initial video can be reduced without affecting a video processing effect, so that the speed of video processing can be further improved.

For a scenario in which the proportion of the mask region in the first mask sequence is greater than or equal to a proportion threshold, the crop region calculated according to the foregoing Formulas (7) to (10) is large, and the effect of cropping is correspondingly reduced. In a case that the determined target mask M is excessively large, the effect of cropping is excessively small, and it is equivalent to that the first frame sequence and the first mask sequence are not cropped. In this case, the first frame sequence and the first mask sequence corresponding to the first frame sequence may be zoomed by using the following Manner 2, to reduce the workload of processing the initial video without affecting a video processing effect, so that the speed of video processing can be further improved.

In Manner 2, the acquiring a first target frame sequence and a first target mask sequence of an initial video may include: acquiring a first frame sequence of the initial video and a first mask sequence corresponding to the first frame sequence; and in a case that a proportion of a mask region in the first mask sequence is greater than or equal to a proportion threshold, zooming the first frame sequence and the first mask sequence respectively to obtain the first target frame sequence and the first target mask sequence.

For example, all masks in the first mask sequence may be acquired. When proportions of any mask regions in all the masks in the frames of images corresponding to the first frame sequence are all greater than or equal to the proportion threshold, it is determined that the proportion of the mask region in the first mask sequence is greater than or equal to the proportion threshold. Alternatively, the target mask M may be determined first, and the target mask M covers all the masks in the first mask sequence. When the area proportion of a mask region in the target mask M in the frames of images in the first frame sequence is less than the proportion threshold is greater than or equal to the proportion threshold, it is determined that the proportion of the mask region in the first mask sequence is greater than or equal to the proportion threshold.

For example, a zoom ratio of zooming the first frame sequence and the first mask sequence is not limited in all embodiments of the present disclosure. The zoom ratio may be defined based on experience or an application scenario. For example, the zoom ratio may be one second or one third of a side length of an original frame of image and mask. The zoom ratio does not greatly affect a filling effect, and the quantity of pixels to be processed is greatly reduced. Furthermore, for a scenario in which the proportion of the mask region in the first mask sequence is less than the proportion threshold but the distribution of mask regions is scattered, the first target frame sequence and the first target mask sequence may be obtained by using the method provided in Manner 2. For example, when masks are scattered in different regions of an image, for example, the masks are located at an upper right corner and a lower left corner of the image, in this case, a coverage area of the target mask M is excessively large, the effect of cropping the first frame sequence and the first mask sequence is small.

For example, for an initial video with a small data amount, a complete frame sequence and a complete mask sequence of the initial video may be directly used as the foregoing first frame sequence and the foregoing first mask sequence corresponding to the first frame sequence respectively. However, for an initial video with a large data amount, internal memory may fail to be loaded, and as a result the initial video fails to be processed. In this case, the acquiring a first target frame sequence and a first target mask sequence of an initial video may include: acquiring a complete frame sequence of the initial video and a corresponding complete mask sequence; performing shot segmentation on the complete frame sequence and the complete mask sequence respectively to obtain a single-shot frame sequence and a corresponding single-shot mask sequence; in a case that the single-shot frame sequence and the corresponding single-shot mask sequence exceed a duration threshold, fragmenting the single-shot frame sequence and the corresponding single-shot mask sequence to obtain a fragment frame sequence and a corresponding fragment mask sequence, where the fragment frame sequence includes a first frame sequence, and the fragment mask sequence includes a first mask sequence; and obtaining the first target frame sequence and the first target mask sequence according to the first frame sequence and the first mask sequence corresponding to the first frame sequence.

For example, each of a complete frame sequence and a complete mask sequence is formed by combining three shots. Three single-shot frame sequences and three corresponding single-shot mask sequences may be obtained by performing shot segmentation on the complete frame sequence and the complete mask sequence. If any single-shot frame sequence and corresponding single-shot mask sequence in the three single-shot frame sequences and three corresponding single-shot mask sequences exceed a duration threshold, the single-shot frame sequence and corresponding single-shot mask sequence exceeding the duration threshold may be fragmented. The duration threshold is not limited in all embodiments of the present disclosure. For example, the duration threshold may be 1 second or 2 seconds. A quantity of fragments of fragmentation is also not limited in all embodiments of the present disclosure. For example, every adjacent 5 frames may be grouped into one fragment, or every adjacent 8 frames may be grouped into one fragment. After fragmentation, a plurality of fragment frame sequences and a plurality of corresponding fragment mask sequences may be obtained.

For a method for performing shot segmentation and fragmentation on an initial video provided in the embodiments of the present disclosure, the problem that internal memory fails to be loaded due to a large initial video and as a result the initial video fails to be processed can be avoided.

S202: Frame extraction is performed respectively on the first target frame sequence and the first target mask sequence to obtain a first sampled frame sequence and a first remaining frame sequence of the first target frame sequence, and a first sampled mask sequence and a first remaining mask sequence of the first target mask sequence.

A method for performing the frame extraction is not limited in all embodiments of the present disclosure. After the frame extraction is performed on the first target frame sequence, frames extracted from the first target frame sequence form the first sampled frame sequence, and frames not extracted from the first target frame sequence form the first remaining frame sequence. Similarly, after the frame extraction is performed on the first target mask sequence, frames extracted from the first target mask sequence form the first sampled mask sequence, and frames not extracted from the first target mask sequence form the first remaining mask sequence. For example, one frame may be extracted from every 3 frames or 4 frames of the first target frame sequence to obtain the first sampled frame sequence, and frames that are not extracted form the first remaining frame sequence. Similarly, one frame may be extracted from every same quantity of frames of the first target mask sequence as the first target frame sequence to obtain the first sampled mask sequence, and frames that are not extracted form the first remaining mask sequence.

S203: Perform optical flow propagation and image inpainting on the first sampled frame sequence and the first sampled mask sequence to obtain a first inpainted sampled frame sequence.

In some embodiments, the first sampled mask sequence is configured for indicating a region that requires processing in the first sampled frame sequence. In the region that requires processing, because of the removal of, for example, a watermark, a moving object, or the like, unknown regions are generated in images in the first sampled frame sequence. Therefore, the unknown regions in the first sampled frame sequence need to be filled, to perform inpainting on the foregoing first sampled frame sequence.

In all embodiments of the present disclosure, the performing optical flow propagation and image inpainting on the first sampled frame sequence and the first sampled mask sequence to obtain a first inpainted sampled frame sequence may include: performing optical flow propagation on the first sampled frame sequence and the first sampled mask sequence to obtain a first updated sampled gradient frame sequence and a first updated sampled mask sequence; performing Poisson reconstruction on the first updated sampled gradient frame sequence and the first updated sampled mask sequence to obtain a first updated sampled frame sequence; and performing frame-by-frame image inpainting on the first updated sampled frame sequence to obtain the first inpainted sampled frame sequence.

In a possible implementation, the first updated sampled gradient frame sequence is a frame sequence obtained by filling the unknown regions in the first sampled frame sequence. The first updated sampled mask sequence is a mask sequence corresponding to the first updated sampled gradient frame sequence. For example, optical flow propagation may be performed on a frame of image by using a previous frame of image and a next frame of image of the frame of image. As shown in FIG. 4, forward propagation may be performed on a previous frame of image, that is, FIG. 4(a), of a frame of image, to fill an unknown region in the frame of image to obtain FIG. 4(b1). In addition, backward propagation is performed on a next frame of image, that is, FIG. 4(c), of the frame of image, to fill the unknown region in the frame of image to obtain FIG. 4(b2).

For a region that has been filled in the first updated sampled gradient frame sequence compared with the first sampled frame sequence, the first sampled mask sequence needs to be correspondingly updated to obtain the first updated sampled mask sequence. For example, values of the first sampled mask sequence corresponding to the foregoing region that has been filled may be changed from 1 into 0 to obtain the first updated sampled mask sequence.

In all embodiments of the present disclosure, after the first updated sampled gradient frame sequence and the first updated sampled mask sequence are obtained, Poisson reconstruction may be performed on the first updated sampled gradient frame sequence and the first updated sampled mask sequence to obtain a first updated sampled frame sequence. The Poisson reconstruction is configured for reconstructing the first updated sampled gradient frame sequence and the first updated sampled mask sequence in a gradient pixel mode into a first updated sampled frame sequence in a Red Green Blue (RGB) pixel mode. For example, each frame of image is represented by using a two-dimensional discrete function, and the derivative of the two-dimensional discrete function is calculated. Therefore, a derivative value may be used to describe a pixel at a corresponding position. This pixel description mode may be referred to as the gradient pixel mode. For example, a gradient pixel G of a point (i, j) may be described according to the following Formula (11):

$$G = dx(i, j) + dy(i, j) \ (11),$$

where dx represents an operation of differentiating an independent variable, and dy represents an operation of differentiating a function value.

Furthermore, a pixel may be described by using an RGB value. This pixel description mode may be referred to as the RGB pixel mode. For example, an RGB value corresponding to a pixel may be (50, 80, 10). A red value corresponding to the pixel is 50, a green value is 80, and a blue value is 10.

For example, an octree may be constructed according to the first updated sampled gradient frame sequence and the first updated sampled mask sequence, and a spatial function is set for each node of the octree. A linear sum of all spatial functions may represent one vector field. Subsequently, a Poisson equation may be solved for the vector field. A solution to the Poisson equation may be iteratively calculated by using a Laplace matrix. The first updated sampled frame sequence may be obtained according to the solution to the Poisson equation.

In some embodiments, unknown pixels that fail to be filled through optical flow propagation may exist in the first updated sampled frame sequence. A region formed by these unknown pixels that fail to be filled may be referred to as an isolated region. The isolated region is included in the foregoing unknown region.

For example, frame-by-frame image inpainting may be performed on the isolated region in the first updated sampled frame sequence to obtain the first inpainted sampled frame sequence. For example, image inpainting may be performed on the isolated region by using a pre-trained neural network model. A type of the neural network model is not limited in all embodiments of the present disclosure. For example, DeepFillv2 (a gated convolution-based neural network model) or Contextual Reconstruction-Fill (CR-Fill) may be used. After optical flow propagation is performed on the first sampled frame sequence and the first sampled mask sequence, the first sampled frame sequence and the first sampled mask sequence include an isolated region in which pixels are not filled. The image impainting in embodiments of the present disclosure includes filling the isolated region by using a trained neural network model.

In all embodiments of the present disclosure, the performing optical flow propagation on the first sampled frame sequence and the first sampled mask sequence to obtain a first updated sampled gradient frame sequence and a first updated sampled mask sequence may include: performing flow estimation on the first sampled frame sequence to obtain a first sampled optical flow sequence; performing gradient pixel conversion on the first sampled frame sequence to obtain a first sampled gradient frame sequence; performing flow filling on a mask region in the first sampled optical flow sequence to obtain a first filled sampled optical flow sequence; and performing optical flow propagation on the first sampled gradient frame sequence and the first sampled mask sequence according to the first filled sampled optical flow sequence to acquire the first updated sampled gradient frame sequence and the first updated sampled mask sequence.

For example, in the method for flow estimation, any two adjacent frames of images in the first sampled frame sequence may be inputted, and pixels in the two adjacent frames of images are matched through flow estimation. Subsequently, the first sampled optical flow sequence may be outputted, and the first sampled optical flow sequence includes a next optical flow image and a previous optical flow image that correspond to any frame of image. The next optical flow image is an optical flow image between the frame of image and a previous frame of image of the frame of image, and the previous optical flow image is an optical flow image between the frame of image and a next frame of image of the frame of image. Both the next optical flow image and the previous optical flow image may indicate offsets of the image in a horizontal direction and a vertical direction.

In all embodiments of the present disclosure, gradient pixel conversion may be performed on the first sampled frame sequence, so that the first sampled frame sequence in an RGB pixel mode is converted into the first sampled gradient frame sequence in the corresponding gradient pixel mode. Then flow filling is performed on the first sampled optical flow sequence and the first sampled mask sequence to obtain the first filled sampled optical flow sequence.

For example, the flow filling is configured for filling a mask region in an optical flow image. In a process of flow filling, a Laplace equation may be solved first for the corresponding mask region in the optical flow image, to make the filled optical flow smoothly joined to an edge optical flow.

In all embodiments of the present disclosure, in the process of flow filling, flow filling may be separately performed on a frame of image according to a next optical flow image between the frame of image and a previous frame of image and a previous optical flow image between the frame of image and a next frame of image, to obtain the first filled sampled optical flow sequence. Then, optical flow propagation may be performed on the first sampled gradient frame sequence and the first sampled mask sequence by using a matching relationship in the first filled sampled optical flow sequence to acquire the first updated sampled gradient frame sequence and the first updated sampled mask sequence.

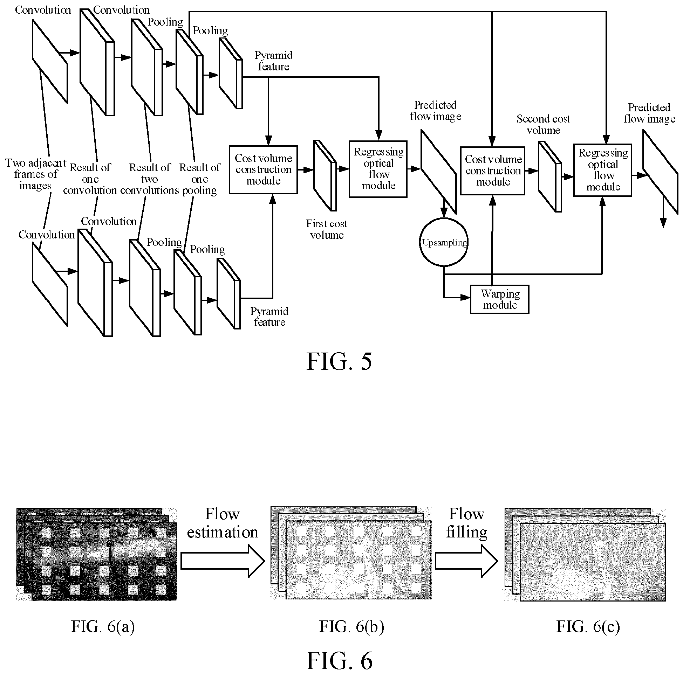

A method used for the flow estimation is not limited in all embodiments of the present disclosure. In a possible implementation, flow estimation may be performed by using a Convolutional Neural Network (CNN). For example, a diagram of a CNN-based flow estimation module may be shown in FIG. 5. The CNN-based flow estimation module is a lightweight flow estimation network module.

In FIG. 5, two convolution operations are first performed on two adjacent frames of images through a convolution layer, and a pyramid feature is extracted through two pooling operations. Subsequently, a first cost volume corresponding to the pyramid feature may be obtained through a cost volume construction module, and then a convolution of a pyramid feature extracted from a previous frame of image and the first cost volume are inputted into a regressing optical flow module to obtain a predicted flow image corresponding to the previous frame of image. For example, the foregoing cost volume may be configured for describing a matching degree between corresponding pixels in two frames of images. The regressing optical flow module may be configured to perform flow estimation on corresponding feature points in the two frames of images by using a regressing model to obtain a corresponding predicted flow image.

Further subsequently, the predicted flow image corresponding to the previous frame of image may be upsampled to obtain an upsampling result. A result obtained through one pooling operation of the upsampling result and a next frame of image is inputted into a warping module to obtain a warping result. For example, the warping may be configured for converting a change such as a shot position change, an object change in an image, or the like, so that corresponding pixels in the two frames of images are aligned. The warping can reduce a processing range corresponding to flow estimation to reduce a calculation amount of the flow estimation module. Then, a result obtained through one pooling operation of the warping result and the previous frame of image may be inputted together into the cost volume construction module to obtain a second cost volume. In addition, a convolution of a result obtained through one pooling operation of the next frame of image and the second cost volume are inputted into the regressing optical flow module to obtain a predicted flow image corresponding to the next frame of image. Correspondingly, subsequently an operation such as upsampling or the like may further be performed based on the predicted flow image corresponding to the next frame of image to obtain a predicted flow image corresponding to a still next frame of image.

In all embodiments of the present disclosure, flow estimation may be performed by using the foregoing flow estimation module in FIG. 5. A speed of performing flow estimation by the flow estimation module may be up to 91 frames per second (FPS, a quantity of frames transmitted per second), and is 27 times that of a RAFT network. Therefore, the embodiments of the present disclosure can improve the speed of flow estimation, and obtain a good flow estimation effect. In this way, the efficiency of processing a video using the video processing method can be improved, and the quality of video processing can be ensured.

In exemplary embodiments, a schematic diagram of processes of flow estimation and flow filling may be shown in FIG. 6. In FIG. 6, FIG. 6(a) is a schematic diagram of an image in the first sampled frame sequence. As shown in FIG. 6, the image includes a mask region. A predicted flow image shown in FIG. 6(b) may be obtained by performing flow estimation on the image. The predicted flow image is included in the first sampled optical flow sequence. Subsequently, a filled optical flow image shown in FIG. 6(c) may be obtained by performing flow filling on the predicted flow image. The filled optical flow image is included in the first filled sampled optical flow sequence.

S204: Perform optical flow propagation and image inpainting on the first inpainted sampled frame sequence, the first remaining frame sequence, and the first remaining mask sequence to obtain a first inpainted remaining frame sequence.

In sll embodiments of the present disclosure, the performing optical flow propagation and image inpainting on the first inpainted sampled frame sequence, the first remaining frame sequence, and the first remaining mask sequence to obtain a first inpainted remaining frame sequence may include: performing gradient pixel conversion on the first remaining frame sequence to obtain a first remaining gradient frame sequence; obtaining a first remaining optical flow sequence according to the first remaining frame sequence and the first sampled frame sequence; performing flow filling on a mask region in the first remaining optical flow sequence to obtain a first filled remaining optical flow sequence; and performing optical flow propagation and image inpainting on the first remaining gradient frame sequence, the first filled remaining optical flow sequence, the first inpainted sampled frame sequence, and the first remaining mask sequence to obtain the first inpainted remaining frame sequence.

In some embodiments, a method for performing gradient pixel conversion on the first remaining frame sequence to obtain the first remaining gradient frame sequence may be the same as the foregoing method for performing gradient pixel conversion on the first sampled frame sequence. In this case, details are not described herein again.

In all embodiments of the present disclosure, the obtaining a first remaining optical flow sequence according to the first remaining frame sequence and the first sampled frame sequence may include: determining a target remaining frame in the first remaining frame sequence; determining a target previous frame and a target next frame of the target remaining frame from the first sampled frame sequence; obtaining a next optical flow image between the target previous frame and the target remaining frame and a previous optical flow image between the target next frame and the target remaining frame; and determining the first remaining optical flow sequence according to the next optical flow image and the previous optical flow image.

The target remaining frame is not limited in all embodiments of the present disclosure. The target remaining frame may be any frame in the first remaining frame sequence. The target previous frame of the target remaining frame is a frame that precedes the target remaining frame in the first sampled frame sequence and is closest to the target remaining frame. The target next frame of the target remaining frame is a frame that follows the target remaining frame in the first sampled frame sequence and is closest to the target remaining frame.

For example, it is assumed that the first sampled frame sequence may be {X_0, X_4, X_8, ...}, and the first remaining frame sequence may be {X_1, X_2, X_3, X_5, X_6, X_7, X_9, ...}. When the target remaining frame is X_1, the target previous frame of the target remaining frame is X_0, and the target next frame is X_4. After the target previous frame of the target remaining frame and the target next frame are determined, the next optical flow image between the target previous frame and the target remaining frame and the previous optical flow image between the target next frame and the target remaining frame may be obtained by using a flow estimation method. Subsequently, the first remaining optical flow sequence may be determined according to next optical flow images and previous optical flow images of a plurality of target remaining frames. For example, the flow estimation method may be the same as the foregoing method for performing flow estimation on the first sampled frame sequence. In this case, details are not described herein again.

In some embodiments, a method for performing flow filling on the mask region in the first remaining optical flow sequence may be the same as the foregoing method for performing flow filling on the first sampled optical flow sequence. In this case, details are not described herein again. Then, optical flow propagation and image inpainting may be performed on the first remaining gradient frame sequence by using the first filled remaining optical flow sequence and the first inpainted sampled frame sequence to obtain the first inpainted remaining frame sequence. For example, a method for performing optical flow propagation and image inpainting on the first remaining gradient frame sequence may be the same as the foregoing method for performing optical flow propagation and image inpainting on the first sampled frame sequence and the first sampled mask sequence. In this case, details are not described herein again.

In some embodiments, while optical flow propagation is performed on the first remaining gradient frame sequence, the first remaining mask sequence may be further correspondingly updated to obtain a first updated remaining mask sequence. A method for correspondingly updating the first remaining mask sequence may be the same as the foregoing method for correspondingly updating the first sampled mask sequence. In this case, details are not described herein again.

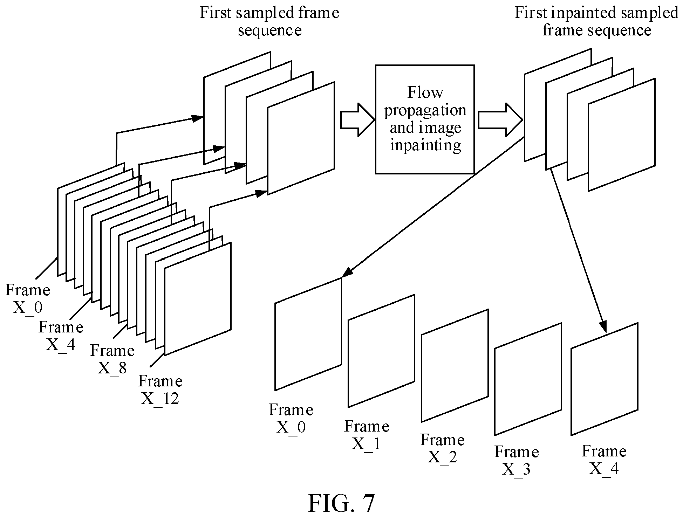

In exemplary embodiments, a schematic diagram of a process of obtaining the first inpainted remaining frame sequence may be shown in FIG. 7. Frame extraction may be first performed on the first target frame sequence. In FIG. 7, it is assumed that the first target frame sequence includes 13 frames, namely, a frame X_0 to a frame X_12. Frame extraction is performed on the first target frame sequence to obtain a first sampled frame sequence including the frame X_0, the frame X_4, the frame X_8, and the frame X_12. Then, optical flow propagation and image inpainting may be performed on the first sampled frame sequence to obtain the first inpainted sampled frame sequence. Then, for the frame X_1, a target previous frame is the frame X_0, and a target next frame is the frame X_4. Therefore, a filled optical flow image corresponding to the frame X_1 may be obtained by using the frame X_0 and the frame X_4. Similarly, filled optical flow images corresponding to the frame X_2 and the frame X_3 may be obtained by using the frame X_0 and the frame X_4. According to the foregoing steps, subsequently filled optical flow images corresponding to the frame X_5, the frame X_6, and the frame X_7 may be sequentially obtained by using the frame X_4 and the frame X_8; and filled optical flow images corresponding to the frame X_9, the frame X_10, and the frame X_11 are sequentially obtained by using the frame X_8 and the frame X_12. Details are not described herein again.

S205: Combine the first inpainted sampled frame sequence and the first inpainted remaining frame sequence to obtain an inpainted video of the initial video.

In some embodiments, each frame of image in the first inpainted sampled frame sequence may be inserted into the first inpainted remaining frame sequence according to an order of frames, so that a complete inpainted frame sequence may be obtained. The complete frame sequence may correspond to the inpainted video of the initial video.

In all embodiments of the present disclosure, before the first sampled frame sequence and the first remaining frame sequence are processed to obtain the first inpainted sampled frame sequence and the first inpainted remaining frame sequence, shot segmentation and/or fragmentation may be performed on the initial video. In this case, the fragment frame sequence may further include a second frame sequence, and the fragment mask sequence may further include a second mask sequence. In this case, the combining the first inpainted sampled frame sequence and the first inpainted remaining frame sequence to obtain an inpainted video of the initial video may include: inserting tail frames of the first inpainted sampled frame sequence and the first inpainted remaining frame sequence into the second frame sequence and the second mask sequence respectively as head frames of the second frame sequence and the second mask sequence; processing the second frame sequence and the second mask sequence to obtain a second inpainted sampled frame sequence and a second inpainted remaining frame sequence; and combining the first inpainted sampled frame sequence, the first inpainted remaining frame sequence, the second inpainted sampled frame sequence, and the second inpainted remaining frame sequence to obtain the inpainted video.

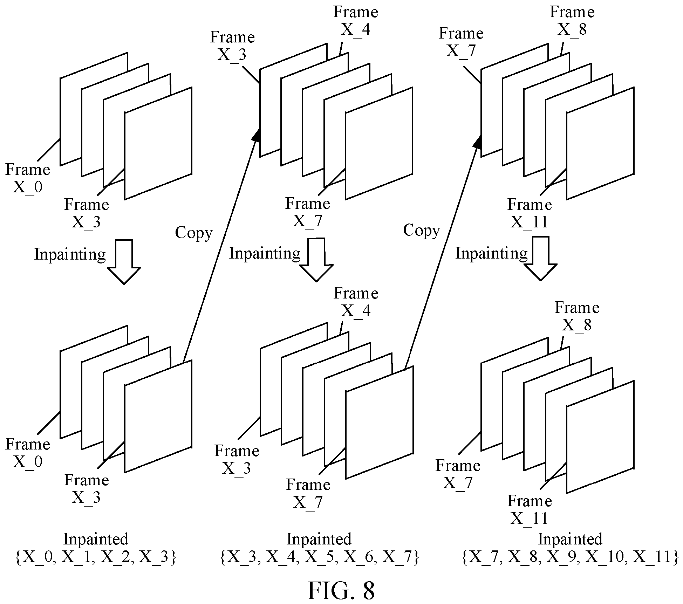

For example, a schematic diagram of a process of video processing may be shown in FIG. 8. In FIG. 8, every 4 consecutive frames may be grouped into one fragment. An initial video with 12 frames may be divided into 3 fragments shown in FIG. 8, which are respectively a frame X_0 to a frame X_3, a frame X_4 to a frame X_7, and a frame X_8 to a frame X_11. Subsequently, a fragment frame sequence and a fragment mask sequence that correspond to each fragment of video may be inpainted according to an arrangement order of the frames. Therefore, a fragment frame sequence and a fragment mask sequence that correspond to the frame X_0 to the frame X_3 may be first processed to obtain an inpainted video, that is, inpainted {X_0, X_1, X_2, X_3} shown in FIG. 8, corresponding to the frame X_0 to the frame X_3. Subsequently, a tail frame, that is, the frame X_3, in the inpainted video, may be inserted at the beginning of a fragment frame sequence and a fragment mask sequence that correspond to the frame X_4 to the frame X_7. Subsequently, the fragment frame sequence and the fragment mask sequence that correspond to the frame X_3 to the frame X_7 may be inpainted to obtain an inpainted video, that is, inpainted {X_3, X_4, X_5, X_6, X_7} shown in FIG. 8, corresponding to the frame X_4 to the frame X_7. A method for processing a fragment frame sequence and a fragment mask sequence that correspond to the frame X_8 to the frame X_11 is similar. Through the method for inserting a tail frame, information in an inpainted video of a previous fragment may be acquired during processing of a fragment frame sequence and a fragment mask sequence. In all embodiments of the present disclosure, after shot segmentation and/or fragmentation is performed on an initial video, video inpainting may be sequentially performed on fragment frame sequences and corresponding fragment mask sequences according to an order. Moreover, the last frame in each inpainted fragment frame sequence is inserted into a next fragment frame sequence as a head frame, which is configured for inpainting the next fragment frame sequence. Through the method, loss of information between fragments caused by simple segmentation can be avoided. Therefore, a good video processing effect can be obtained.

The foregoing description of grouping every 4 consecutive frames into one fragment and dividing a video with 12 frames into 3 fragments is only an example, and is not used to limit the foregoing method for inserting a tail frame.

In the method provided in the embodiments of the present disclosure, in one aspect, a first sampled frame sequence and a first sampled mask sequence may be first processed by using a frame extraction method to obtain a first inpainted sampled frame sequence. A first remaining frame sequence is then processed through the first inpainted sampled frame sequence and a first remaining mask sequence, to acquire an inpainted video of an initial video. Therefore, in the present disclosure, remaining frame sequences may be processed by using the first inpainted sampled frame sequence through frame extraction, to avoid multiple rounds of processing of each frame of image, thereby reducing a calculation amount. Therefore, the efficiency of video processing can be improved. In another aspect, through shot segmentation and/or video fragmentation, a problem of insufficient internal memory caused by a large video can be effectively avoided. In addition, the last frame in each inpainted fragment frame sequence is inserted into a next fragment frame sequence as a head frame, which is configured for inpainting the next fragment frame sequence. Through the method, loss of information between fragments caused by simple segmentation can be avoided, so that a good video processing effect can be obtained.

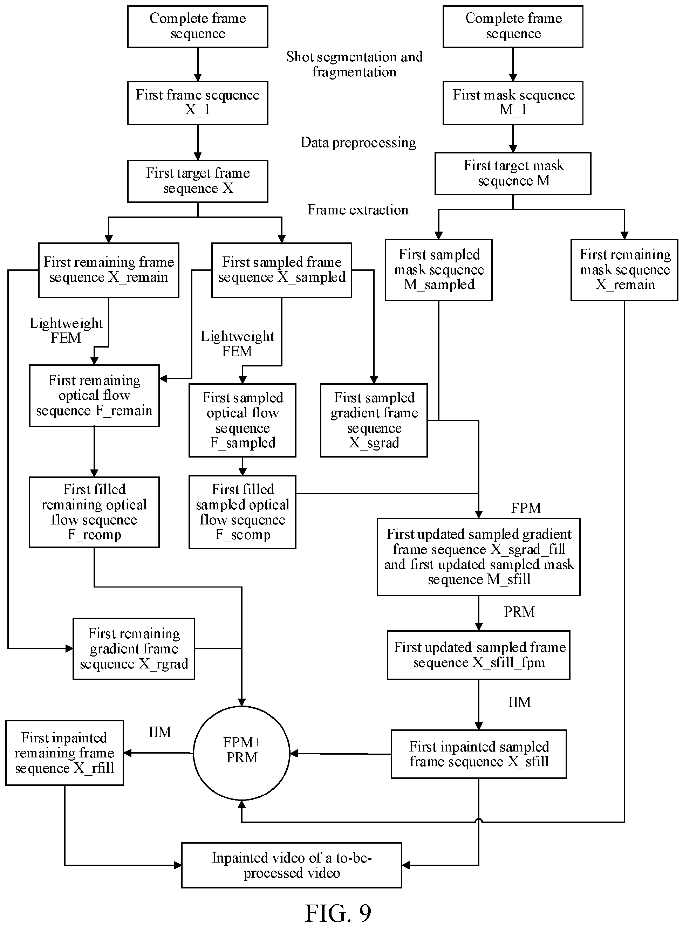

FIG. 9 is a flowchart of a video processing method according to an embodiment of the present disclosure. For example, a first target frame sequence may be represented as $X = \{X_t\}$, $(t = 0,1,2, ..., T)$, and a first target mask sequence may be represented as $M = \{M_t\}$, $(t = 0,1,2, ..., T)$. The objective of this scheme is to obtain a processed video sequence $y = \{y_t\}$, $(t = 0,1,2, ..., T)$. The processed video sequence y is different from X only in a mask region, so that y is natural and consistent in time and space. It is difficult to define "natural" and "consistent" in formulas. Therefore, in this scheme, the processed video sequence y is close to $y_{gt}$, where $y_{gt}$ is configured for representing a true value of a video sequence without a mask.

First, a complete frame sequence and a complete mask sequence of a to-be-inpainted video may be first acquired, and shot segmentation and/or fragmentation may be performed on the complete frame sequence and the complete mask sequence to obtain a first frame sequence X_1 and a first mask sequence M_1. Subsequently, the first frame sequence X_1 and the first mask sequence M_1 may be respectively cropped or zoomed by using a data preprocessing module (DPM) to obtain a first target frame sequence X and a first target mask sequence M.

Then, frame extraction may be performed on the first target frame sequence X to obtain a first sampled frame sequence X_sampled and a first remaining frame sequence X_remain. For example, if 1 frame is extracted from every 4 frames for the first target frame sequence, X_sampled = {X_0, X_4, X_8, ...}. If a tail frame of the first target frame sequence X is not chosen, the tail frame is added to the first sampled frame sequence X sampled. In addition, frame extraction is performed on the first target mask sequence M to obtain a first sampled mask sequence M sampled and a first remaining mask sequence X _remain. Subsequently, X sampled and M sampled may be inputted into an optical flow propagation module (FPM) and an image inpainting module (IIM) to output an inpainted subset. Different from the scheme of multiple rounds of propagation, in this case, only one round of filling is performed by using the FPM, and frame-by-frame filling is performed on an unfilled isolated region by using the IIM.

In FIG. 9, gradient pixel conversion may be performed on the first sampled frame sequence X sampled to obtain a first sampled gradient frame sequence X sgrad, and the first sampled frame sequence X sampled is inputted into a lightweight flow estimation module (FEM) to perform flow estimation to obtain a first sampled optical flow sequence F_sampled. The first sampled optical flow sequence F_sampled is inputted into a flow completion module (FCM) to perform flow filling to obtain a first filled sampled optical flow sequence F_scomp.

Then, the first filled sampled optical flow sequence F_scomp, the first sampled gradient frame sequence X sgrad, and the first sampled mask sequence M_sampled may be inputted into the FPM to perform optical flow propagation to obtain a first updated sampled gradient frame sequence X_sgrad_fill and a first updated sampled mask sequence M_sfill. For example, in this case, the FPM and the process of frame extraction may be included in a sampled propagation module (SPM).

Then the first updated sampled gradient frame sequence X sgrad_fill and the first updated sampled mask sequence M_sfill are inputted into a Poisson reconstruction module (PRM) to perform Poisson reconstruction to obtain a first updated sampled frame sequence X_sfill_fpm. Frame-by-frame image inpainting is performed on the first updated sampled frame sequence by using the IIM to obtain a first inpainted sampled frame sequence X_sfill.

Similarly, gradient pixel conversion may be performed on the first remaining frame sequence X_remain to obtain a first remaining gradient frame sequence X_rgrad. The first remaining frame sequence X_remain and the first sampled frame sequence X_sampled are inputted into the lightweight FEM to perform flow filling to obtain a first remaining optical flow sequence. Flow filling is performed on the mask region in the first remaining optical flow sequence to obtain a first filled remaining optical flow sequence F_rcomp.

Then, the first remaining gradient frame sequence X_rgrad, the first filled remaining optical flow sequence F_rcomp, the first inpainted sampled frame sequence X_sfill, and the first remaining mask sequence X_remain may be inputted into the FPM and the PRM to perform flow filling and Poisson reconstruction to obtain a first updated remaining frame sequence X_rgrad_fill. Frame-by-frame image inpainting is performed on the first updated remaining frame sequence X_rgrad_fill by using the IIM to obtain a first inpainted remaining frame sequence X_rfill. In some embodiments, for each unchosen frame X_remain, a previous frame X_prev and a next frame X_next that are closest to the unchosen frame X_remain in X sampled are found. For example, for the foregoing case in which 1 frame is extracted from every 4 frames for the first target frame sequence, it is assumed that X_remain is a frame X_1. In this case, the closest previous frame X_prev is a frame X_0, and the closest next frame X_next is a frame X_4.

Optical flow propagation is respectively performed between X_remain and the previous frame X_prev and the next frame X_next, and pixels in a corresponding region are filled by using an optical flow. If pixels are filled at a same position, the pixels are averaged. For an unfilled region, filling is separately performed by using the IIM. Finally, the first inpainted remaining frame sequence and the first inpainted sampled frame sequence are combined to obtain an inpainted video of an initial video.

In the embodiments of the present disclosure, a calculation amount of the FPM is large. To reduce the time consumption of the optical flow propagation module, in this scheme, frame extraction is first performed on a frame sequence before optical flow propagation. After filling of extracted frames is completed, content of a previous frame and a next frame is propagated to remaining frames at once by using an optical flow. Therefore, only one round of optical flow propagation is performed in this scheme, so that the calculation amount of the FPM is reduced, and the time consumption is reduced. Subsequently, frame-by-frame image inpainting may be performed on an isolated region by using the IIM, to completely fill each frame. In this case, to avoid using multiple rounds of flow filling to process an isolated region, the calculation amount of the FPM can be reduced. Therefore, this scheme can accelerate a video processing algorithm, to achieve commercially feasible processing efficiency.

For the video processing method provided in FIG. 9, multiple rounds of optical flow propagation can be avoided, to accelerate the deployment of the video processing algorithm. As shown in Table 1, for a shot with 188 frames, in this scheme, a process of preprocessing a video by using the DPM, that is, a process of cropping or zooming the video, takes approximately 267.8 seconds, the multi-round optical flow propagation scheme takes approximately 821.4 seconds, and the time consumption is approximately reduced by 67.4%. In this scheme, a process of performing flow estimation on the video by using the FEM takes approximately 217.4 seconds, and compared with the multi-round optical flow propagation scheme, the time consumption is approximately reduced by 73.5%. In this scheme, a process of performing frame extraction and optical flow propagation on the video by using the SPM takes approximately 88.2 seconds. Because frame extraction is performed before optical flow propagation, compared with the multi-round optical flow propagation scheme, the time consumption can be approximately reduced by 89.3%.

Table 1

| Scheme Module | Multi-round optical flow propagation scheme | This scheme | Time consumption reduction |
|---|---|---|---|
| DPM | 821.4 seconds | 267.8 seconds | 67.4% |
| FEM | 821.4 seconds | 217.4 seconds | 73.5% |
| SPM | 821.4 seconds | 88.2 seconds | 89.3% |

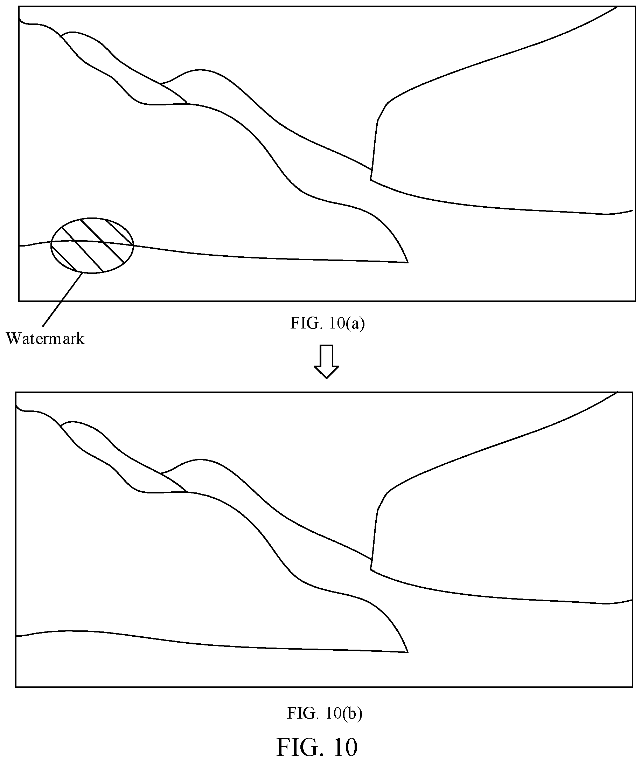

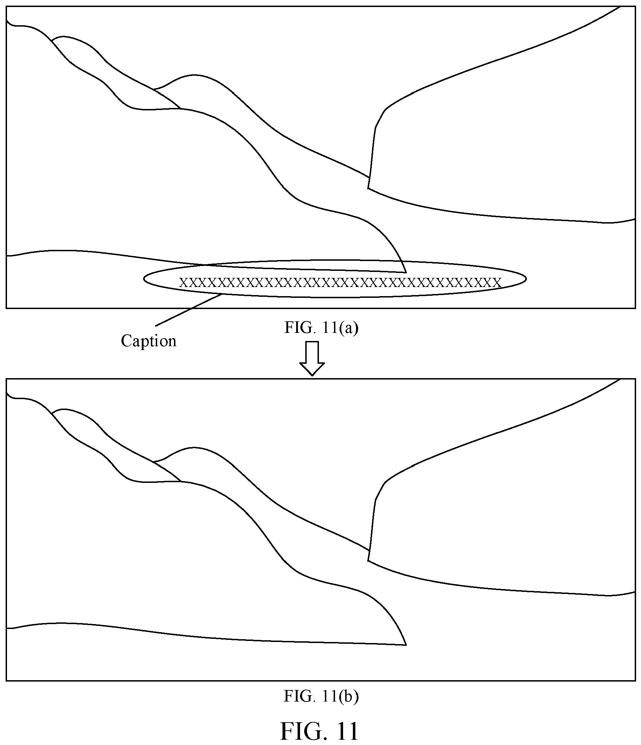

For example, a schematic diagram of a video processing effect of removing a watermark may be shown in FIG. 10. In FIG. 10(a), an elliptical watermark exists at a lower left corner of an initial video. The elliptical watermark can be removed by using the method provided in all embodiments of the present disclosure, and an effect after removal may be shown in FIG. 10(b). For example, a schematic diagram of a video processing effect of removing a caption may be shown in FIG. 11. In FIG. 1 1(a), a line of caption exists at a bottom of an initial video. The line of caption can be removed by using the method provided in all embodiments of the present disclosure, and an effect after removal may be shown in FIG. 11(b). For example, a schematic diagram of a video processing effect of removing a moving object may be shown in FIG. 12. In FIG. 12(a), a person riding a bicycle exists in an initial video. The person riding a bicycle can be removed by using the method provided in all embodiments of the present disclosure, and an effect after removal may be shown in FIG. 12(b).

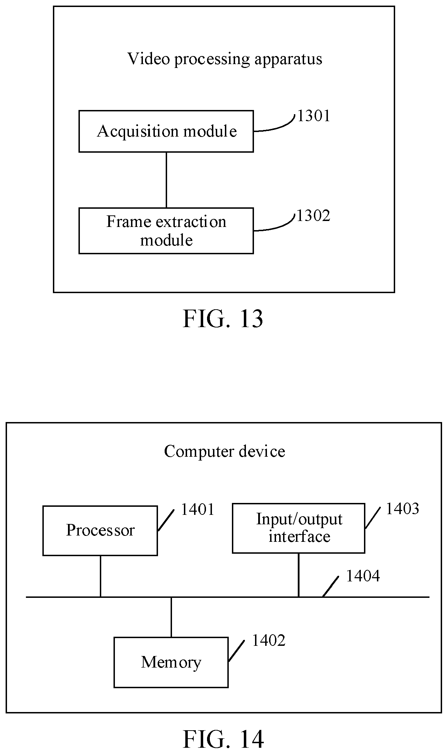

FIG. 13 is a schematic diagram of a video processing apparatus according to an embodiment of the present disclosure. As shown in FIG. 13, the video processing apparatus provided in the embodiments of the present disclosure may include an acquisition module 1301 and a frame extraction module 1302.

The acquisition module 1301 is configured to acquire a first target frame sequence and a first target mask sequence of an initial video.

The frame extraction module 1302 is configured to respectively perform frame extraction on the first target frame sequence and the first target mask sequence to obtain a first sampled frame sequence and a first remaining frame sequence thereof and a first sampled mask sequence and a first remaining mask sequence thereof.

The acquisition module 1301 is further configured to perform optical flow propagation and image inpainting on the first sampled frame sequence and the first sampled mask sequence to obtain a first inpainted sampled frame sequence.

The acquisition module 1301 is further configured to perform optical flow propagation and image inpainting on the first inpainted sampled frame sequence, the first remaining frame sequence, and the first remaining mask sequence to obtain a first inpainted remaining frame sequence.

The acquisition module 1301 is further configured to combine the first inpainted sampled frame sequence and the first inpainted remaining frame sequence to obtain an inpainted video of the initial video.

In exemplary embodiments, the acquisition module 1301 is configured to: perform gradient pixel conversion on the first remaining frame sequence to obtain a first remaining gradient frame sequence; obtain a first remaining optical flow sequence according to the first remaining frame sequence and the first sampled frame sequence; perform flow filling on a mask region in the first remaining optical flow sequence to obtain a first filled remaining optical flow sequence; and perform optical flow propagation and image inpainting on the first remaining gradient frame sequence, the first filled remaining optical flow sequence, the first inpainted sampled frame sequence, and the first remaining mask sequence to obtain the first inpainted remaining frame sequence.

In exemplary embodiments, the acquisition module 1301 is configured to: determine a target remaining frame in the first remaining frame sequence; determine a target previous frame and a target next frame of the target remaining frame from the first sampled frame sequence; obtain a next optical flow image between the target previous frame and the target remaining frame and a previous optical flow image between the target next frame and the target remaining frame; and determine the first remaining optical flow sequence according to the next optical flow image and the previous optical flow image.

In exemplary embodiments, the acquisition module 1301 is configured to: perform optical flow propagation on the first sampled frame sequence and the first sampled mask sequence to obtain a first updated sampled gradient frame sequence and a first updated sampled mask sequence; perform Poisson reconstruction on the first updated sampled gradient frame sequence and the first updated sampled mask sequence to obtain a first updated sampled frame sequence; and perform frame-by-frame image inpainting on the first updated sampled frame sequence to obtain the first inpainted sampled frame sequence.

In exemplary embodiments, the acquisition module 1301 is configured to: perform flow estimation on the first sampled frame sequence to obtain a first sampled optical flow sequence; perform gradient pixel conversion on the first sampled frame sequence to obtain a first sampled gradient frame sequence; perform flow filling on a mask region in the first sampled optical flow sequence to obtain a first filled sampled optical flow sequence; and perform optical flow propagation on the first sampled gradient frame sequence and the first sampled mask sequence according to the first filled sampled optical flow sequence to acquire the first updated sampled gradient frame sequence and the first updated sampled mask sequence.

In exemplary embodiments, the acquisition module 1301 is configured to: acquire a first frame sequence of the initial video and a first mask sequence corresponding to the first frame sequence; in a case that a proportion of a mask region in the first mask sequence is less than a proportion threshold, determine a target mask according to the first mask sequence, where a mask region of the target mask covers the mask region in the first mask sequence; and crop the first frame sequence and the first mask sequence respectively according to the target mask to obtain the first target frame sequence and the first target mask sequence.

In exemplary embodiments, the acquisition module 1301 is configured to: obtain an external extension pixel quantity of the mask region of the target mask according to a length and a width of the mask region of the target mask; obtain a crop boundary of the mask region of the target mask according to the length, the width, and the external extension pixel quantity of the mask region of the target mask; obtain a crop region including the mask region of the target mask according to the crop boundary of the mask region of the target mask and the length and the width of the mask region of the target mask; and crop the first frame sequence and the first mask sequence according to the crop region to obtain the first target frame sequence and the first target mask sequence.

In exemplary embodiments, the acquisition module 1301 is configured to: acquire a first frame sequence of the initial video and a first mask sequence corresponding to the first frame sequence; and in a case that a proportion of a mask region in the first mask sequence is greater than or equal to a proportion threshold, zoom the first frame sequence and the first mask sequence respectively to obtain the first target frame sequence and the first target mask sequence.

In exemplary embodiments, the acquisition module 1301 is configured to: acquire a complete frame sequence of the initial video and a corresponding complete mask sequence; perform shot segmentation on the complete frame sequence and the complete mask sequence respectively to obtain a single-shot frame sequence and a corresponding single-shot mask sequence; in a case that the single-shot frame sequence and the corresponding single-shot mask sequence exceed a duration threshold, fragment the single-shot frame sequence and the corresponding single-shot mask sequence to obtain a fragment frame sequence and a corresponding fragment mask sequence, where the fragment frame sequence includes a first frame sequence, and the fragment mask sequence includes a first mask sequence; and obtain the first target frame sequence and the first target mask sequence according to the first frame sequence and the first mask sequence corresponding to the first frame sequence.

In exemplary embodiments, the fragment frame sequence further includes a second frame sequence, and the fragment mask sequence further includes a second mask sequence; and the acquisition module 1301 is configured to: insert tail frames of the first inpainted sampled frame sequence and the first inpainted remaining frame sequence into the second frame sequence and the second mask sequence respectively as head frames of the second frame sequence and the second mask sequence; process the second frame sequence and the second mask sequence to obtain a second inpainted sampled frame sequence and a second inpainted remaining frame sequence; and combine the first inpainted sampled frame sequence, the first inpainted remaining frame sequence, the second inpainted sampled frame sequence, and the second inpainted remaining frame sequence to obtain the inpainted video.

In the apparatus provided in the embodiments of the present disclosure, a first sampled frame sequence and a first sampled mask sequence may be first processed by using a frame extraction method to obtain a first inpainted sampled frame sequence. A first remaining frame sequence is then processed through the first inpainted sampled frame sequence and a first remaining mask sequence, to acquire an inpainted video of an initial video. Therefore, in the present disclosure, remaining frame sequences may be processed by using the first inpainted sampled frame sequence through frame extraction, to avoid multiple rounds of processing of each frame of image, thereby reducing a calculation amount. Therefore, the efficiency of video processing can be improved.

FIG. 14 is a schematic structural diagram of a computer device according to an embodiment of the present disclosure. As shown in FIG. 14, the computer device in the embodiments of the present disclosure may include one or more processors 1401, a memory 1402, and an input/output interface 1403. The processor 1401, the memory 1402, and the input/output interface 1403 are connected by a bus 1404. The memory 1402 is configured to store a computer program. The computer program includes program instructions. The input/output interface 1403 is configured to receive data and output data, for example, configured to perform data interaction between a host and the computer device, or configured to perform data interaction between virtual machines in the host; and the processor 1401 is configured to execute the program instructions stored in the memory 1402.

The processor 1401 may perform the following operations: acquiring a first target frame sequence and a first target mask sequence of an initial video; respectively performing frame extraction on the first target frame sequence and the first target mask sequence to obtain a first sampled frame sequence and a first remaining frame sequence thereof and a first sampled mask sequence and a first remaining mask sequence thereof; obtaining a first inpainted sampled frame sequence according to the first sampled frame sequence and the first sampled mask sequence; obtaining a first inpainted remaining frame sequence according to the first inpainted sampled frame sequence, the first remaining frame sequence, and the first remaining mask sequence; and obtaining an inpainted video of the initial video according to the first inpainted sampled frame sequence and the first inpainted remaining frame sequence.

In some feasible implementations, the processor 1401 may be a central processing unit (CPU), or the processor may be another general purpose processor, a digital signal processor (DSP), an application-specific integrated circuit (ASIC), a field-programmable gate array (FPGA) or another programmable logical device, a discrete gate, a transistor logic device, a discrete hardware component, or the like. The general-purpose processor may be a microprocessor, or the processor may be any conventional processor or the like.

The memory 1402 may include a read-only memory and a random access memory, and provide instructions and data to the processor 1401 and the input/output interface 1403. Part of the memory 1402 may further include a non-volatile random access memory. For example, the memory 1402 may further store information of a device type.

During specific implementation, the computer device may use functional modules embedded in the computer device to perform implementations of video processing provided in steps of any foregoing method embodiment. For details, refer to the implementations provided in the steps of foregoing method embodiments. Details are not described herein again.

Embodiments of the present disclosure provide a computer device, including a processor, an input/output interface, and a memory, the processor acquiring a computer program in the memory to perform the steps in the method in any foregoing embodiment.

Embodiments of the present disclosure further provide a computer-readable storage medium, the computer-readable storage medium storing a computer program, the computer program being suitable for being loaded by the processor and executing the method for training an acoustic model provided in various steps in any foregoing embodiment. For details, refer to implementations provided in steps in any embodiment. Details are not described herein again. In addition, the description of beneficial effects of the same method are not described herein again. For technical details that are not disclosed in the computer-readable storage medium embodiments of the present disclosure, refer to the descriptions of the method embodiments of the present disclosure. As an example, the computer program may be deployed to be executed on one computer device, or executed on a plurality of computer devices located at one place, or executed on a plurality of computer devices that are distributed at a plurality of places and are interconnected by a communication network.

The computer-readable storage medium may be the video processing apparatus provided in any foregoing embodiment or an internal storage unit of the computer device, for example, a hard disk or internal memory of the computer device. The computer-readable storage medium may be an external storage device of the computer device, for example, a removable hard disk, a smart media card (SMC), a secure digital (SD) card, a flash card, or the like equipped on the computer device. Further, the computer-readable storage medium may include both an internal storage unit of the computer device and an external storage device. The computer-readable storage medium is configured to store the computer program and another program and data that are required by the computer device. The computer-readable storage medium may be further configured to temporarily store data that has been output or data to be output.

Embodiments of the present disclosure further provide a computer program product or a computer program, the computer program product or the computer program including computer instructions, the computer instructions being stored in a computer-readable storage medium, a processor of a computer device reading the computer instructions from the computer-readable storage medium, the processor executing the computer instructions, to cause the computer device to perform the method provided in various optional manners in any foregoing embodiment.

The terms "first", "second", and the like in the description, claims, and the accompanying drawings of the embodiments of the present disclosure are used to distinguish different objects, but are used to describe a specific sequence. In addition, the term "include" and any variant thereof are intended to cover a non-exclusive inclusion. For example, a process, a method, an apparatus, a product, or a device that includes a series of steps or units is not limited to the listed steps or modules, but further includes an unlisted step or module in some embodiments, or further includes another inherent step or unit of the process, the method, the apparatus, the product, or the device in some embodiments.

A person of ordinary skill in the art may realize that, in combination with the embodiments herein, units and algorithm, steps of each example described can be implemented with electronic hardware, computer software, or the combination thereof. In order to clearly describe the interchangeability between the hardware and the software, compositions and steps of each example have been generally described according to functions in the descriptions. Whether the functions are executed in a mode of hardware or software depends on particular applications and design constraint conditions of the technical solutions. A person skilled in the art can use different methods to implement the described functions for each particular application, but it is to be considered that the implementation goes beyond the scope of the embodiments of the present disclosure.

The method provided in the embodiments of the present disclosure and the related apparatus are described with reference to the method flowcharts and/or schematic structural diagrams provided in the embodiments of the present disclosure. Specifically, computer program instructions can implement each procedure and/or block in the method flowcharts and/or schematic structural diagrams and a combination of procedures and/or blocks in the flowcharts and/or block diagrams. These computer program instructions may be provided to a general-purpose computer, a dedicated computer, an embedded processor, or a processor of another programmable application display device to generate a machine, so that the instructions executed by the computer or the processor of the another programmable application display device generate an apparatus for implementing a specific function in one or more processes in the flowcharts and/or in one or more blocks in the schematic structural diagrams. These computer program instructions may alternatively be stored in a computer-readable memory that can instruct a computer or another programmable application display device to work in a specific manner, so that the instructions stored in the computer-readable memory generate an artifact that includes an instruction apparatus. The instruction apparatus implements a specific function in one or more procedures in the flowcharts and/or in one or more blocks in the schematic structural diagrams. These computer program instructions may further be loaded onto a computer or another programmable application display device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the schematic structural diagrams.

What is disclosed above is merely exemplary embodiments of the present disclosure, and certainly is not intended to limit the scope of the claims of the present disclosure. Therefore, equivalent variations made in accordance with the claims of the present disclosure shall fall within the scope of the present disclosure.

**Claims**

1. A video processing method, executable by a computer device, the method comprising:

    acquiring a first frame sequence and a first mask sequence of an initial video, the first frame sequence comprising a plurality of consecutive frames of the initial video, the first mask sequence comprising at least one frame to be inpainted of the initial video;
    performing frame extraction respectively on the first frame sequence and the first mask sequence to obtain a first sampled frame sequence and a first remaining frame sequence, and a first sampled mask sequence and a first remaining mask sequence;
    performing optical flow propagation and image inpainting on the first sampled frame sequence and the first sampled mask sequence to obtain a first inpainted sampled frame sequence;
    performing optical flow propagation and image inpainting on the first inpainted sampled frame sequence, the first remaining frame sequence, and the first remaining mask sequence to obtain a first inpainted remaining frame sequence; and
    combining the first inpainted sampled frame sequence and the first inpainted remaining frame sequence to obtain an inpainted video of the initial video.

2. The method according to claim 1, wherein the performing optical flow propagation and image inpainting on the first inpainted sampled frame sequence, the first remaining frame sequence, and the first remaining mask sequence to obtain a first inpainted remaining frame sequence comprises:

    performing gradient pixel conversion on the first remaining frame sequence to obtain a first remaining gradient frame sequence;
    obtaining a first remaining optical flow sequence according to the first remaining frame sequence and the first sampled frame sequence;
    performing optical flow filling on a mask region in the first remaining optical flow sequence to obtain a first filled remaining optical flow sequence; and
    performing optical flow propagation and image inpainting on the first remaining gradient frame sequence, the first filled remaining optical flow sequence, the first inpainted sampled frame sequence, and the first remaining mask sequence to obtain the first inpainted remaining frame sequence.

3. The method according to claim 2, wherein the obtaining a first remaining optical flow sequence according to the first remaining frame sequence and the first sampled frame sequence comprises:

determining a remaining frame in the first remaining frame sequence;
determining a previous frame and a next frame of the remaining frame from the first sampled frame sequence;
obtaining a forward optical flow image between the previous frame and the remaining frame and a backward optical flow image between the next frame and the remaining frame; and
determining the first remaining optical flow sequence according to the forward optical flow image and the backward optical flow image.

4. The method according to any one of claims 1 to 3, wherein the performing optical flow propagation and image inpainting on the first sampled frame sequence and the first sampled mask sequence to obtain a first inpainted sampled frame sequence comprises:

performing optical flow propagation on the first sampled frame sequence and the first sampled mask sequence to obtain a first updated sampled gradient frame sequence and a first updated sampled mask sequence;
performing Poisson reconstruction on the first updated sampled gradient frame sequence and the first updated sampled mask sequence to obtain a first updated sampled frame sequence; and
performing frame-by-frame image inpainting on the first updated sampled frame sequence to obtain the first inpainted sampled frame sequence.

5. The method according to claim 4, wherein the performing optical flow propagation on the first sampled frame sequence and the first sampled mask sequence to obtain a first updated sampled gradient frame sequence and a first updated sampled mask sequence comprises:

performing optical flow estimation on the first sampled frame sequence to obtain a first sampled optical flow sequence;
performing gradient pixel conversion on the first sampled frame sequence to obtain a first sampled gradient frame sequence;
performing optical flow filling on a mask region in the first sampled optical flow sequence to obtain a first filled sampled optical flow sequence; and
performing optical flow propagation on the first sampled gradient frame sequence and the first sampled mask sequence by using the first filled sampled optical flow sequence to obtain the first updated sampled gradient frame sequence and the first updated sampled mask sequence.

6. The method according to any one of claims 1 to 3, wherein the acquiring a first frame sequence and a first mask sequence of an initial video comprises:

acquiring a first frame sequence of the initial video and a first mask sequence corresponding to the first frame sequence;
determining a mask according to the first mask sequence in a case that a proportion of a mask region in the first mask sequence is less than a proportion threshold, wherein a mask region of the mask covers the mask region in the first mask sequence; and
cropping the first frame sequence and the first mask sequence respectively according to the mask to obtain the first frame sequence and the first mask sequence.

7. The method according to claim 6, wherein the cropping the first frame sequence and the first mask sequence respectively according to the mask to obtain the first frame sequence and the first mask sequence comprises:

obtaining an external extension pixel quantity of the mask region of the mask according to a length and a width of the mask region of the mask;
obtaining a crop boundary of the mask region of the mask according to the length, the width, and the external extension pixel quantity of the mask region of the mask;
obtaining a crop region comprising the mask region of the mask according to the crop boundary of the mask region of the mask and the length and the width of the mask region of the mask; and
cropping the first frame sequence and the first mask sequence respectively according to the crop region to obtain the first frame sequence and the first mask sequence.

8. The method according to any one of claims 1 to 3, wherein the acquiring a first frame sequence and a first mask sequence of an initial video comprises:

acquiring a first frame sequence of the initial video and a first mask sequence corresponding to the first frame sequence; and

zooming, in a case that a proportion of a mask region in the first mask sequence is greater than or equal to a proportion threshold, the first frame sequence and the first mask sequence respectively to obtain the first frame sequence and the first mask sequence.

9. The method according to any one of claims 1 to 3, wherein the acquiring a first frame sequence and a first mask sequence of an initial video comprises:

acquiring a complete frame sequence of the initial video and a corresponding complete mask sequence;

performing shot segmentation on the complete frame sequence and the complete mask sequence respectively to obtain a single-shot frame sequence and a corresponding single-shot mask sequence;

fragmenting, in a case that durations of the single-shot frame sequence and the corresponding single-shot mask sequence exceed a duration threshold, the single-shot frame sequence and the corresponding single-shot mask sequence to obtain a fragment frame sequence and a corresponding fragment mask sequence, wherein the fragment frame sequence comprises a first frame sequence, and the fragment mask sequence comprises a first mask sequence; and

obtaining the first frame sequence and the first mask sequence according to the first frame sequence and the first mask sequence corresponding to the first frame sequence.

10. The method according to claim 9, wherein the fragment frame sequence further comprises a second frame sequence, and the fragment mask sequence further comprises a second mask sequence; and

wherein the combining the first inpainted sampled frame sequence and the first inpainted remaining frame sequence to obtain an inpainted video of the initial video comprises:

inserting tail frames of the first inpainted sampled frame sequence and the first inpainted remaining frame sequence respectively into the second frame sequence and the second mask sequence, as head frames of the second frame sequence and the second mask sequence;

processing the second frame sequence and the second mask sequence to obtain a second inpainted sampled frame sequence and a second inpainted remaining frame sequence; and

combining the first inpainted sampled frame sequence, the first inpainted remaining frame sequence, the second inpainted sampled frame sequence, and the second inpainted remaining frame sequence to obtain the inpainted video.

11. A video processing apparatus, comprising:

an acquisition module, configured to acquire a first frame sequence and a first mask sequence of an initial video, the first frame sequence comprising a plurality of consecutive frames of the initial video, the first mask sequence comprising at least one frame to be inpainted of the initial video; and

a frame extraction module, configured to perform frame extraction respectively on the first frame sequence and the first mask sequence to obtain a first sampled frame sequence and a first remaining frame sequence, and a first sampled mask sequence and a first remaining mask sequence,

the acquisition module being further configured to perform optical flow propagation and image inpainting on the first sampled frame sequence and the first sampled mask sequence to obtain a first inpainted sampled frame sequence;

the acquisition module being further configured to perform optical flow propagation and image inpainting on the first inpainted sampled frame sequence, the first remaining frame sequence, and the first remaining mask sequence to obtain a first inpainted remaining frame sequence; and

the acquisition module being further configured to combine the first inpainted sampled frame sequence and the first inpainted remaining frame sequence to obtain an inpainted video of the initial video.

12. A computer device, comprising a processor, a memory, and an input/output interface,
the processor being connected to the memory and the input/output interface, the input/output interface being configured to receive data and output data, the memory being configured to store a computer program, the processor being configured to invoke the computer program, to cause the computer device to perform the video processing method according to any one of claims 1 to 10.

13. A computer-readable storage medium storing a computer program, the computer program being loaded and executed by a processor, to cause a computer device comprising the processor to perform the video processing method according to any one of claims 1 to 10.

14. A computer program product comprising a computer program, the computer program being executed by a processor to implement the video processing method according to any one of claims 1 to 10.

Initial video

Terminal 11                                    Server 12

FIG. 1

| Acquire a first frame sequence and a first mask sequence of an initial video | S201 |

↓

| Perform frame extraction respectively on the first frame sequence and the first mask sequence to obtain a first sampled frame sequence and a first remaining frame sequence, and a first sampled mask sequence and a first remaining mask sequence | S202 |

↓

| Perform optical flow propagation and image inpainting on the first sampled frame sequence and the first sampled mask sequence to obtain a first inpainted sampled frame sequence | S203 |

↓

| Perform optical flow propagation and image inpainting on the first inpainted sampled frame sequence, the first remaining frame sequence, and the first remaining mask sequence to obtain a first inpainted remaining frame sequence | S204 |

↓

| Combine the first inpainted sampled frame sequence and the first inpainted remaining frame sequence to obtain an inpainted video of the initial video | S205 |

FIG. 2

FIG. 3

FIG. 4

FIG. 5

FIG. 6(a)                     FIG. 6(b)                     FIG. 6(c)

FIG. 6

First sampled frame
sequence

First inpainted sampled
frame sequence

Flow
propagation
and image
inpainting

Frame
X_0

Frame
X_4

Frame
X_8

Frame
X_12

Frame
X_0

Frame
X_1

Frame
X_2

Frame
X_3

Frame
X_4

FIG. 7

FIG. 8

FIG. 9

FIG. 10(a)

Watermark

FIG. 10(b)

FIG. 10

XXXXXXXXXXXXXXXXXXXXXXXXXXXXXXXXXXXXXX

Caption

FIG. 11(a)

FIG. 11(b)

FIG. 11

Person riding
a bicycle

FIG. 12(a)

FIG. 12(b)

FIG. 12

Video processing apparatus

Acquisition module /1301

Frame extraction module /1302

FIG. 13

Computer device

Processor /1401

Input/output interface /1403

/1404

Memory /1402

FIG. 14

## INTERNATIONAL SEARCH REPORT

| International application No. |
|---|
| **PCT/CN2023/082430** |

**A. CLASSIFICATION OF SUBJECT MATTER**

G06T5/00(2006.01)i

According to International Patent Classification (IPC) or to both national classification and IPC

**B. FIELDS SEARCHED**

Minimum documentation searched (classification system followed by classification symbols)

IPC:G06T H04N G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 视频, 掩膜, 掩模, 掩码, 蒙版, 模板, 掩蔽, 遮罩, 帧, 抽帧, 间隔, 重建, 重构, 修正, 复原, 像素, 梯度, 光流, 合并, 组合, 融合, video, mask, shade, frame, extraction, reconstruct, repair, pixel, gradient, optical flow, light stream, merge, combine, confuse

**C. DOCUMENTS CONSIDERED TO BE RELEVANT**

| Category* | Citation of document, with indication, where appropriate, of the relevant passages | Relevant to claim No. |
|---|---|---|
| PX | CN 115115538 A (TENCENT TECHNOLOGY (SHENZHEN) CO., LTD.) 27 September 2022 (2022-09-27)<br>claims 1-14 | 1-14 |
| A | WO 2022093283 A1 (INNOPEAK TECHNOLOGY, INC.) 05 May 2022 (2022-05-05)<br>description, paragraphs [0005]-[0081] | 1-14 |
| A | CN 110443764 A (BEIJING BAIDU NETCOM SCIENCE AND TECHNOLOGY CO., LTD.) 12 November 2019 (2019-11-12)<br>entire document | 1-14 |
| A | CN 113038176 A (BEIJING BYTEDANCE NETWORK TECHNOLOGY CO., LTD.) 25 June 2021 (2021-06-25)<br>entire document | 1-14 |
| A | US 2015036736 A1 (AXIS AB) 05 February 2015 (2015-02-05)<br>entire document | 1-14 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 June 2023** | **14 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/082430**

### C. DOCUMENTS CONSIDERED TO BE RELEVANT

| Category* | Citation of document, with indication, where appropriate, of the relevant passages | Relevant to claim No. |
|---|---|---|
| A | WO 03084235 A1 (BRITISH TELECOMMUNICATIONS PUBLIC LIMITED COMPANY) 09 October 2003 (2003-10-09)<br>entire document | 1-14 |
| A | US 7184100 B1 (MATE-MEDIA ACCESS TECHNOLOGIES LTD.) 27 February 2007 (2007-02-27)<br>entire document | 1-14 |

Form PCT/ISA/210 (second sheet) (July 2022)

# EP 4 425 422 A1

## INTERNATIONAL SEARCH REPORT
### Information on patent family members

International application No.

**PCT/CN2023/082430**

| Patent document cited in search report | | | Publication date (day/month/year) | Patent family member(s) | | | Publication date (day/month/year) |
|---|---|---|---|---|---|---|---|
| CN | 115115538 | A | 27 September 2022 | None | | | |
| WO | 2022093283 | A1 | 05 May 2022 | None | | | |
| CN | 110443764 | A | 12 November 2019 | None | | | |
| CN | 113038176 | A | 25 June 2021 | None | | | |
| US | 2015036736 | A1 | 05 February 2015 | EP | 2838268 | A1 | 18 February 2015 |
| | | | | CN | 104349074 | A | 11 February 2015 |
| WO | 03084235 | A1 | 09 October 2003 | None | | | |
| US | 7184100 | B1 | 27 February 2007 | WO | 9951022 | A1 | 07 October 1999 |

Form PCT/ISA/210 (patent family annex) (July 2022)

34

**REFERENCES CITED IN THE DESCRIPTION**

**Patent documents cited in the description**

• CN 202210545680X